# EUROPEAN PATENT SPECIFICATION

(11) **EP 4 242 896 B1**
(45) Date of publication and mention of the grant of the patent: **27.08.2025**
(21) Application number: 23177287.2
(22) Date of filing: 27.10.2021
(51) Int. Cl.: G06F 21/32, G06F 21/62

(54) **IDENTITY AUTHENTICATION SYSTEM**
IDENTITÄTSAUTHENTIFIZIERUNGSSYSTEM
SYSTÈME D'AUTHENTIFICATION D'IDENTITÉ

(30) Priority: 09.11.2020 KR 20200148635
(43) Date of publication of application: 13.09.2023
(62) Divisional of application: 21204901.9
(73) Proprietor: Ghost Pass Inc., Gwangju 61005 (KR)
(72) Inventor: LEE, Seon Gwan, 61265 Gwangju (KR); KWON, Jun Young, 07809 Seoul (KR)
(74) Representative: Hoefer & Partner Patentanwälte mbB

(56) References cited:
- KR-A- 20190 136 902
- US-A1- 2007 162 963
- US-A1- 2008 046 366
- US-A1- 2019 370 688

## Description

### BACKGROUND

### 1. Field

The present invention relates to an identity authentication system using biometric information of a user.

### 2. Description of the Related Art

Various electronic devices provide a variety of functions using users' biometric information. For example, a mobile electronic device allows its use by recognizing a user's face or iris. Also, a gate security system opens a gate by recognizing a user's fingerprint.

Various services provided using users' biometric information offer convenience to the users. However, there is a security problem which may cause fatal damage to the users when the users' biometric information is hacked or opened to the public. Accordingly, there are limitations in providing various functions.

Recently, to solve the security problem of biometric information leakage, research is under way on a technology for storing biometric information of a user in a mobile electronic device that the user possesses instead of a specific server.

Meanwhile, to perform identity authentication not through a specific server which uses a fixed Internet protocol (IP) address but through a mobile electronic device that a user possesses, it is necessary to manually input a code for identifying the mobile electronic device of the user for identity authentication every time, which is troublesome. For example, as an identification code, a mobile phone number, a personal identification number (PIN), or the like for identifying a mobile electronic device may be used. US 2007/162963 A1 concerns a method and a login server for providing a user with a centralised login procedure. A user has registered in a login server two or more devices he is associated with. The user performs a first login procedure on a first device of the two or more devices. Login data representative of the first login are sent from the first device to the login server. The login server verifies the login data for authentication of the user for the first device. After authentication of the user by the login server, the login server accesses credentials associated with the user for the first device and sends said credentials to the first device to unlock the first device for the user. Further, the login server accesses credentials associated with the user for another device of the two or more devices and sends said credentials to said other device. The sent credentials are used to unlock said other device for the user. US 2008/046366 A1 concerns a system and method which is provided for authorizing a payment for a point of sale transaction by authenticating the user of a mobile device, such as a mobile phone. It authenticates the consumer and verifies that he is authorized to conduct a transaction at the point of sale by means of the consumer's mobile device.

### SUMMARY

The present invention is directed to providing an identity authentication system which allows non-face-to-face and contactless authentication and does not require the manual input of an identification code for identity authentication every time.

The present invention is also directed to providing an identity authentication system with an improved security level.

These objects are solved by the features of the independent claims. The dependent claims contain advantageous embodiments of the present invention. According to an aspect of the present invention, there is provided an identity authentication system including an identity authentication device in which first data including biometric information of a user is stored, an identity authentication request device configured to generate second data by sensing a body part of the user, and a server configured to receive the second data and select personal information of a user corresponding to the second data among pieces of pre-stored personal information of a plurality of users through machine learning of the second data.

The identity authentication request device may transmit the second data to the identity authentication device which is identified on the basis of the personal information of the user received from the server, and the identity authentication device may determine whether the first data corresponds to the second data and transmit authentication data to the identity authentication request device as a result of the determination.

When the authentication data is not received from the identified identity authentication device within a preset period, the identity authentication request device may output an identification failure message and transmit a retraining command to the server.

The identity authentication request device may perform a preset function when the authentication data includes the result representing that the first data corresponds to the second data and may output an authentication failure message when the authentication data includes the result representing that the first data does not correspond to the second data.

The first data may include face information of the user, and the second data may include an image of the user's face.

The machine learning may use at least one of a Haar-like algorithm and a convolutional neural network (CNN) algorithm.

The server may transmit the personal information to the identity authentication request device and then permanently delete the second data used for the machine learning.

The server may cumulatively store results of the machine learning as cumulative data.

The personal information may include a mobile phone number for identifying the identity authentication device.

The identity authentication device may include: a wireless communication circuit configured to receive the second data from the identity authentication request device, determine whether the first data corresponds to the second data, and transmit a result of the determination to the identity authentication request device; at least one processor electrically connected to the wireless communication circuit; and a memory electrically connected to the at least one processor and configured to store the first data.

The identity authentication device may further include a camera module or a sensor module, the at least one processor may acquire the first data on the basis of data obtained by sensing the user's body through the camera module or the sensor module, and the memory may store the first data in a secure region.

The identity authentication request device may include a sensor module, a camera module, a wireless communication circuit, and at least one processor electrically connected to the sensor module, the camera module, and the wireless communication circuit, the at least one processor may acquire the second data obtained by sensing the user's body through the sensor module or the camera module, the wireless communication circuit may transmit the second data to the identity authentication device, and the at least one processor may perform a predetermined function on the basis of the authentication data received from the identity authentication device through the wireless communication circuit.

The at least one processor may transmit the second data to the identity authentication device and then permanently delete the second data.

According to another aspect of the present invention, there is provided an identity authentication system including a plurality of identity authentication devices in which first data including biometric information of a user is stored in a distributed manner, an identity authentication request device configured to generate second data by sensing biometric information of the user, and a server configured to receive the second data and select personal information of the user corresponding to the second data among pieces of pre-stored personal information of a plurality of users through machine learning of the second data.

The identity authentication request device may transmit the second data to the plurality of identity authentication devices which are identified on the basis of the personal information of the user received from the server.

The plurality of identity authentication devices may determine whether the first data corresponds to the second data through mutual information exchange and transmit authentication data to the identity authentication request device as a result of the determination.

When the authentication data is not received from the plurality of identified identity authentication devices within a preset period, the identity authentication request device may output an identification failure message and transmit a retraining command to the server.

The identity authentication request device may perform a preset function when the authentication data includes the result representing that the first data corresponds to the second data and may output an authentication failure message when the authentication data includes the result representing that the first data does not correspond to the second data.

The first data may include face information of the user, and the second data may include an image of the user's face.

The machine learning may use at least one of a Haar-like algorithm and a CNN algorithm.

The server may transmit the authentication data to the identity authentication request device and then permanently delete the second data used for the machine learning.

The server may cumulatively store results of the machine learning as cumulative data.

The personal information of the user may include mobile phone numbers for identifying each of the plurality of identity authentication devices.

### BRIEF DESCRIPTION OF THE DRAWINGS

The above and other objects, features, and advantages of the present invention will become more apparent to those of ordinary skill in the art by describing exemplary embodiments thereof in detail with reference to the accompanying drawings, in which:
FIG. 1 is a block diagram of an identity authentication system according to an exemplary embodiment of the present invention;
FIG. 2 is a flowchart illustrating a method of performing identity authentication by an identity authentication device according to an exemplary embodiment of the present invention;
FIG. 3 is a flowchart illustrating a method of requesting, by an identity authentication request device, identity authentication from an identity authentication device using sensing data obtained by sensing a user's body according to an exemplary embodiment of the present invention;
FIG. 4 is a flowchart illustrating a method of specifying, by a server, a user whose identity authentication is requested using sensing data obtained by sensing a user's body and transmitting identification information to an identity authentication request device according to an exemplary embodiment of the present invention;
FIG. 5 is a sequence diagram illustrating an identity authentication process triggered by an identity authentication request among an identity authentication device, an identity authentication request device, and a server according to an exemplary embodiment of the present invention; and
FIG. 6 is a sequence diagram illustrating an identity authentication process triggered by an identity authentication request among an identity authentication device, an identity authentication request device, and a server according to another exemplary embodiment of the present invention.

### DETAILED DESCRIPTION

In describing exemplary embodiments of the present invention, when it is determined that a detailed description of a related well-known configuration or function may obscure the gist of the present specification, the detailed description may be omitted.

As used herein, the terms "include," "may include," etc. indicate the presence of a stated function, operation, component, etc. and do not limit one or more additional functions, operations, components, etc. Also, it is to be understood that the terms "include," "have," etc. used herein indicate the presence of a feature, a numeral, a step, an operation, a component, a part, or a combination thereof and do not preclude the presence or addition of one or more other features, numerals, steps, operations, components, parts, or combinations thereof.

As used herein, singular forms include plural forms unless the context clearly indicates otherwise.

Hereinafter, the present invention will be described in detail with reference to the accompanying drawings.

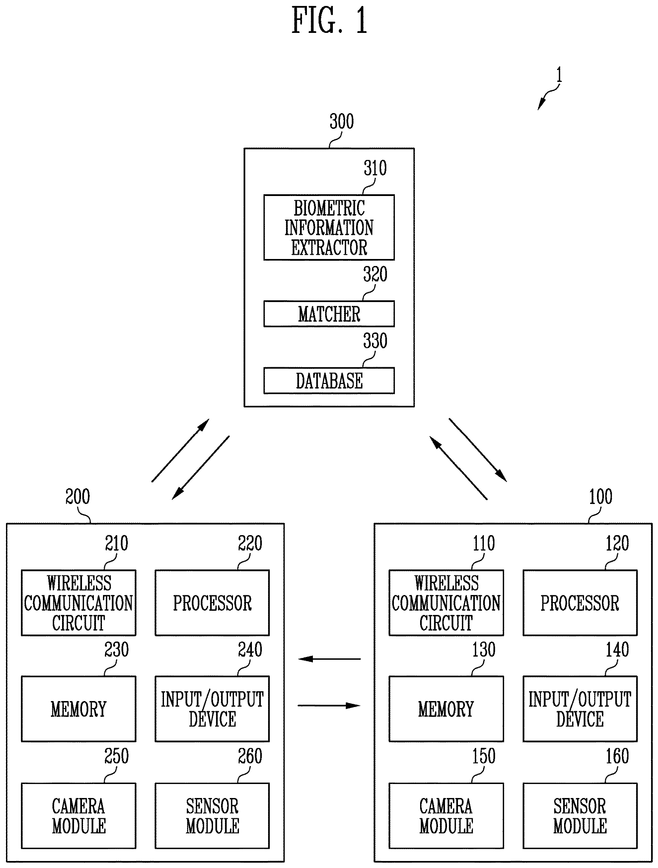

FIG. 1 is a block diagram of an identity authentication system according to an exemplary embodiment of the present invention.

Referring to FIG. 1, an identity authentication system 1 may include an identity authentication device 100, an identity authentication request device 200, and a server 300.

The identity authentication device 100 may perform identity authentication by comparing pre-stored biometric information (or first data) of a user and sensing information (or second data) of the user received from the identity authentication request device 200.

The server 300 may receive personal information of the user from the identity authentication device 100 and store the personal information. Also, the server 300 may extract the biometric information (or the first data) from the sensing information (or the second data) of the user received from the identity authentication request device 200 and match the biometric information (or the first data) to the pre-stored personal information (e.g., identification information) of the user. For example, the identification information may be any one of a telephone number and a personal identification number (PIN) for identifying the identity authentication device 100 in which the biometric information (or the first data) of the user is stored.

The identity authentication request device 200 may transmit the sensing information (or the second data) of the user to the identity authentication device 100 which is identified on the basis of the personal information of the user received from the server 300.

The identity authentication device 100 may perform identity authentication on the user by comparing the biometric information (or the first data) stored in the identity authentication device 100 and the sensing information (or the second data) obtained by the identity authentication request device 200.

For example, the identity authentication device 100 may be a portable electronic device of the user, and the identity authentication request device 200 may be an electronic device provided in a member store of a provider of a service that the user wants to use. The service that the user wants to use varies, and the electronic device related to the service may be present in various forms.

According to the exemplary embodiment of the present invention, the identity authentication device 100 may include a wireless communication circuit 110, a processor 120, a memory 130, an input/output device 140, a camera module 150, and a sensor module 160.

The wireless communication circuit 110 may set communication between the identity authentication device 100 and an external device (e.g., the identity authentication request device 200 or the server 300). Wireless communication may include cellular communication which employs at least one of, for example, Long Term Evolution (LTE), LTE Advanced (LTE-A), code division multiple access (CDMA), wideband CDMA (WCDMA), universal mobile telecommunications system (UMTS), wireless broadband (WiBro), and global system for mobile communications (GSM). According to an exemplary embodiment, wireless communication may employ at least one of, for example, Wi-Fi, Bluetooth, Bluetooth low energy (BLE), ZigBee, near field communication (NFC), magnetic secure transmission, radio frequency (RF), and a body area network (BAN). According to an exemplary embodiment, wireless communication may employ a global navigation satellite system (GNSS). The GNSS may be, for example, the global positioning system (GPS), the Global Navigation Satellite System (GLONASS), the BeiDou navigation satellite system, or Galileo, the European global satellite-based navigation system.

The processor 120 may include one or more of a central processing unit (CPU), an application processor, and a communication processor (CP). The processor 120 may perform, for example, computation or data processing for control of and/or communication with at least one of other components of the identity authentication device 100.

The memory 130 may include a volatile memory and/or a non-volatile memory. The memory 130 may store, for example, instructions or data related to at least one of other components of the identity authentication device 100. According to an exemplary embodiment, the memory 130 may store software and/or programs. The programs may include, for example, a kernel, middleware, an application programming interface (API), and/or an application program (or "application"). The memory 130 may include, for example, an internal memory or an external memory. The internal memory may include at least one of, for example, a volatile memory (e.g., a dynamic random access memory (DRAM), a static RAM (SRAM), or a synchronous dynamic RAM (SDRAM)), a non-volatile memory (e.g., a one-time programmable read-only memory (OTPROM)), a programmable ROM (PROM), an erasable programmable ROM (EPROM), an electrically erasable programmable ROM (EEPROM), a mask ROM, a flash ROM, a flash memory, a hard drive, and a solid state drive (SSD). The external memory may include a flash drive, for example, a CompactFlash (CF), a Secure Digital (SD), a micro-SD, a mini-SD, an extreme Digital (xD), a multi-media card (MMC), a memory stick, or the like. The external memory may be functionally or physically connected to the identity authentication device 100 through one of various interfaces.

The input/output device 140 may include, for example, a touch panel, a (digital) pen sensor, a key, an ultrasonic input device, a display, or an audio module. The touch panel may be at least one of, for example, capacitive, resistive, infrared, and ultrasonic types. The (digital) pen sensor may be a part of the touch panel or may include a separate recognition sheet by way of example. The key may include, for example, a hardware button, an optical key, or a keypad. The ultrasonic input device may detect ultrasonic waves generated by an input tool through a microphone to acquire data corresponding to the detected ultrasonic waves. The display may include a panel, a hologram device, a projector, and/or a control circuit for control thereof. The panel may be implemented to be, for example, flexible, transparent, or wearable. According to an exemplary embodiment, the panel may include a pressure sensor (or force sensor) which may measure the intensity of a user's touch pressure. The hologram device may display a stereoscopic image in the air using the interference of light. The projector may project light onto a screen to display an image. The screen may be positioned, for example, inside or outside the identity authentication device 100. The audio module may convert, for example, a sound into an electrical signal or vice versa. The audio module may process sound information input or output through, for example, a speaker, a receiver, an earphone, a microphone, or the like.

The camera module 150 is, for example, a device which may capture a still image or a video. According to an exemplary embodiment, the camera module 150 may include one or more image sensors (e.g., a front sensor or a rear sensor), a lens, an image signal processor (ISP), or a flash (e.g., a light-emitting diode (LED) or a xenon lamp).

The sensor module 160 may, for example, measure a physical quantity or sense an operation state of the identity authentication device 100 and convert the measured or sensed information into an electrical signal. The sensor module 160 may include, for example, a sound sensor, a gesture sensor, a biometric sensor, an e-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 160 may further include a control circuit for controlling one or more sensors included therein. In some exemplary embodiments, the identity authentication device 100 may further include a processor configured to control the sensor module 160 as a part of the processor 120 or separately from the processor 120 while the processor 120 is a sleep state.

In various embodiments of the present invention, the identity authentication device 100 may include the wireless communication circuit 110, the at least one processor 120 electrically connected to the wireless communication circuit 110, and the memory 130 electrically connected to the at least one processor 120.

The memory 130 may include biometric information (or first data) of users and information on the identity authentication request device 200.

For example, the biometric information (or the first data) of the users may include at least one of face information, voice information, fingerprint information, deoxyribonucleic acid (DNA) information, body skeleton information, hand shape information, retina information, iris information, vein information, ECG information, handwriting information, gait information, signature information, blood vessel information, sweat gland structure information, and biomolecule information.

For example, the information on the identity authentication request device 200 may include at least one of, for example, types of services related to the identity authentication request device 200, details of the services related to the identity authentication request device 200, the location of the identity authentication request device 200, the type of the identity authentication request device 200, and sensor information included in the identity authentication request device 200.

According to the exemplary embodiment of the present invention, the camera module 150 or the sensor module 160 may be included, and the at least one processor 120 may acquire the biometric information (or the first data) of the user on the basis of sensing data (or the second data) obtained by sensing the user's body through the camera module 150 or the sensor module 160 and store the biometric information (or the first data) of the user in a secure region of the memory 130.

According to the exemplary embodiment of the present invention, the at least one processor 120 may install an application related to the identity authentication request device 200 in response to a selection of the user and store the information on the identity authentication request device 200 in the memory 130.

The at least one processor 120 may acquire data about one or more pieces of information, which are required by the identity authentication request device 200 through an application, using the input/output device 140 and transmit the one or more pieces of information acquired by the wireless communication circuit 110 to the identity authentication request device 200.

For example, the at least one processor 120 may receive sensing information (or the second data) from the identity authentication request device 200 using the wireless communication circuit 110 and determine whether the received sensing information (or the second data) corresponds to biometric information (or the first data). The at least one processor 120 may transmit information on whether the sensing information (or the second data) of the user corresponds to the biometric information (or the first data) of the user to the identity authentication request device 200 using the wireless communication circuit 110.

According to the exemplary embodiment of the present invention, the identity authentication request device 200 may include a wireless communication circuit 210, a processor 220, a memory 230, an input/output device 240, a sensor module 260, and a camera module 250.

The wireless communication circuit 210 may set communication between the identity authentication request device 200 and an external device (e.g., the identity authentication device 100 or the server 300). The wireless communication circuit 210 may be implemented the same as the wireless communication circuit 110 of the identity authentication device 100.

The processor 220 may include one or more of a CPU, an application processor, and a CP. The processor 220 may perform, for example, computation or data processing for control of and/or communication with at least one of the other components of the identity authentication request device 200.

The memory 230 may include a volatile memory and/or a non-volatile memory. The memory 230 may store, for example, instructions or data related to at least one of the other components of the identity authentication request device 200. According to an exemplary embodiment, the memory 230 may store software and/or programs. The programs may include, for example, a kernel, middleware, an API, and/or an application program (or "application"). The memory 230 may include, for example, an internal memory or an external memory. The internal memory may include at least one of, for example, a volatile memory (e.g., a DRAM, an SRAM, or an SDRAM), a non-volatile memory (e.g., an OTPROM), a PROM, an EPROM, an EEPROM, a mask ROM, a flash ROM, a flash memory, a hard drive, and an SSD. The external memory may include a flash drive, for example, a CF, an SD, a micro-SD, a mini-SD, an xD, an MMC, a memory stick, or the like. The external memory may be functionally or physically connected to the identity authentication request device 200 through one of various interfaces.

The input/output device 240 may include, for example, a touch panel, a (digital) pen sensor, a key, an ultrasonic input device, a display, or an audio module. The touch panel may be at least one of, for example, capacitive, resistive, infrared, and ultrasonic types. The (digital) pen sensor may be a part of the touch panel or may include a separate recognition sheet by way of example. The key may include, for example, a hardware button, an optical key, or a keypad. The ultrasonic input device may detect ultrasonic waves generated by an input tool through a microphone to acquire data corresponding to the detected ultrasonic waves. The display may include a panel, a hologram device, a projector, and/or a control circuit for control thereof. The panel may be implemented to be, for example, flexible, transparent, or wearable. According to an exemplary embodiment, the panel may include a pressure sensor (or force sensor) which may measure the intensity of the user's touch pressure. The hologram device may display a stereoscopic image in the air using the interference of light. The projector may project light onto a screen to display an image. The screen may be positioned, for example, inside or outside the identity authentication request device 200. The audio module may convert, for example, a sound into an electrical signal or vice versa. The audio module may process sound information input or output through, for example, a speaker, a receiver, an earphone, a microphone, or the like.

The camera module 250 is, for example, a device which may capture a still image or a video. According to an exemplary embodiment, the camera module 250 may include one or more image sensors (e.g., a front sensor or a rear sensor), a lens, an ISP, or a flash (e.g., an LED or a xenon lamp).

The sensor module 260 may, for example, measure a physical quantity or sense an operation state of the identity authentication request device 200 and convert the measured or sensed information into an electrical signal. The sensor module 260 may include, for example, a gesture sensor, a biometric sensor, an e-nose sensor, an EMG sensor, an EEG sensor, an ECG sensor, an IR sensor, an iris sensor, and/or a fingerprint sensor. The sensor module 260 may further include a control circuit for controlling one or more sensors included therein. In some exemplary embodiments, the identity authentication request device 200 may further include a processor configured to control the sensor module 260 as a part of the processor 220 or separately from the processor 220 while the processor 220 is a sleep state.

According to the exemplary embodiment of the present invention, the at least one processor 220 may acquire sensing information (or the second data) obtained by sensing the user's body through the sensor module 260 or the camera module 250. Here, the sensing information (or the second data) of the user may be biometric information (or the first data) of the user which is unprocessed raw data.

For example, the sensing information (or the second data) of the user may include an image file, a voice file, an electronic document, and the like. In other words, sensing information (or the second data) corresponding to biometric information (or the first data), such as face information, fingerprint information, body skeleton information, hand shape information, iris information, handwriting information, signature information, and sweat gland structure information, may be image files, and sensing information (or the second data) corresponding to biometric information (or the first data), such as a voice speaking a specific word, sentence, name, etc., a whistling sound, a cough sound, may be voice files. Also, sensing information (or the second data) corresponding to biometric information (or the first data), such as vein information, ECG information, ECG information, and blood vessel information, may be in the form of electronic documents.

The at least one processor 220 may transmit the sensing information (or the second data) of the user to the server 300 using the wireless communication circuit 210 and acquire identification information, such as a phone number, of the identity authentication device 100 from the server 300. Also, the at least one processor 220 may transmit the sensing information (or the second data) of the user to the identified identity authentication device 100 and receive authentication data from the identity authentication device 100 using the wireless communication circuit 210. The at least one processor 220 may perform a predetermined function on the basis of the authentication data or output an authentication failure message through the input/output device 240.

The memory 230 may not store the sensing information (or the second data) of the user. For example, the at least one processor 220 may receive the authentication data from the identity authentication device 100 and then permanently delete the sensing information (or the second data) of the user in the memory 230.

The server 300 according to the exemplary embodiment of the present invention may include a biometric information extractor 310, a matcher 320, and a database 330.

The biometric information extractor 310 may receive sensing information (or the second data) of the user from the identity authentication request device 200 and extract the biometric information (or the first data) of the user from the received sensing information (or the second data) of the user through machine learning. As described above, the sensing information (or the second data) of the user may include an image file, a voice file, an electronic document, and the like. As an example, a case in which the sensing information (or the second data) of the user is in the form of an image file will be described below for convenience of description.

According to the exemplary embodiment of the present invention, the sensing information (or the second data) of the user may be an image obtained by capturing the user's face. The image may be in one file format among BMP, JPG (JPEG), GIF, EPS, TIF (TIFF), PSD, PIC, DXF, PP3, PICT, PNG, desktop color separations (DCS), FlashPix, PCX, PDF, PIXAR, Raw, Scitex CT (SCT), and Targa.

In this case, the biometric information extractor 310 may extract face information of the user from the image through machine learning. For example, the biometric information extractor 310 may extract the face information using at least one of a Haar-like algorithm and a convolutional neural network (CNN) algorithm. In other words, the biometric information extractor 310 may use an algorithm obtained by combining characteristics of the Haar-like algorithm and the CNN algorithm. The CNN algorithm exhibits excellent performance in big data processing.

According to the exemplary embodiment, the biometric information extractor 310 may extract biometric information (or first data) on the basis of cumulative machine learning data stored in the database 330 in advance. In this case, the cumulative machine learning data may be obtained by accumulating machine learning results of the biometric information extractor 310 on sensing information (or second data). The cumulative machine learning data may include only features of images for determining which user corresponds to a face extracted from an arbitrary image. In other words, the cumulative machine learning data does not function alone as biometric information (or first data) but may be information for determining who is a user requesting identity authentication from the image received from the identity authentication request device 200.

The matcher 320 may select personal information (e.g., identification information) of the user corresponding to the biometric information (or the first data) of the user extracted through the biometric information extractor 310 from among pieces of pre-stored personal information of a plurality of users. Also, the matcher 320 may transmit the selected personal information of the user to the identity authentication request device 200.

According to the exemplary embodiment, the matcher 320 may determine whether the biometric information (or the first data) corresponds to a certain user's personal information on the basis of a lookup table pre-stored in the database 330. Here, the lookup table may include personal information (e.g., identification information) corresponding to each of the plurality of users. For example, the lookup table may be a table in which each of the plurality of users corresponds to identification information of one of the plurality of users. For example, the identification information may be a phone number or a PIN for identifying the identity authentication device 100 in which biometric information (or first data) of a specific user is stored.

The database 330 may include personal information of each of a registered plurality of users. For example, personal information of a user may include a mobile phone number, a PIN, an identification (ID), a password, a name, a sex, an address, an e-mail address, and an identification number related to a service provided by the identity authentication request device 200.

According to the exemplary embodiment of the present invention, the database 330 may store cumulative data which is a machine learning result from the sensing information (or the second data) of the user and may not store either of the biometric information (or the first data) and the sensing information (or the second data). Here, the cumulative data may be updated every time the biometric information extractor 310 performs machine learning on an image received from the identity authentication request device 200.

Also, the database 330 may include a lookup table in which the name of the user is matched to identification information (e.g., a mobile phone number) for identifying the identify authentication device 100 storing the biometric information (or the first data) of the user.

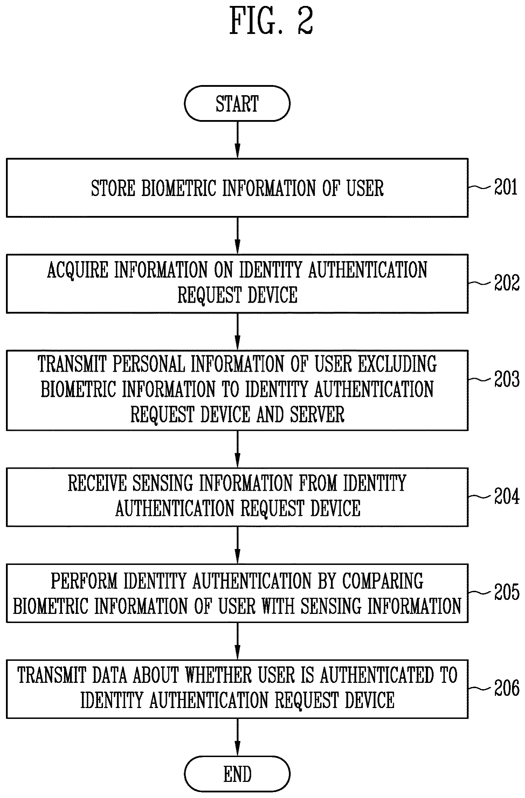

FIG. 2 is a flowchart illustrating a method of performing identity authentication by an identity authentication device according to an exemplary embodiment of the present invention. The identity authentication device 100 may perform identity authentication by checking sensing information (or second data) received from the identity authentication request device 200.

Referring to FIGS. 1 and 2, in operation 201, the identity authentication device 100 may store biometric information (or first data) of a user in the memory 130 on the basis of data obtained by sensing the user's body. The biometric information (or the first data) may include at least one of face information, voice information, fingerprint information, DNA information, body skeleton information, hand shape information, retina information, iris information, vein information, ECG information, handwriting information, gait information, signature information, blood vessel information, sweat gland structure information, and biomolecule information.

For example, the identity authentication device 100 may acquire a face image as sensing information (or second data) by imaging the user's face through the camera module 150, extract the biometric information (or the first data) from the face image, and store the biometric information in the memory 130. Here, the biometric information (or the first data) includes a feature for distinguishing the specific user from a plurality of users. The identity authentication device 100 according to the exemplary embodiment may store information on an ID card of the user in the memory 130 together with the biometric information (or the first data) of the user. For example, the identity authentication device 100 may store one or more of ID card information, passport information, and driver's license information in the memory 130.

In operation 202, the identity authentication device 100 may acquire information on the identity authentication request device 200 according to a selection of the user. For example, the identity authentication device 100 may install an application related to the identity authentication request device 200 according to a selection of the user for using a service provided by the identity authentication request device 200.

The information related to the identity authentication request device 200 varies according to types or characteristics of the service provided by the identity authentication request device 200. The identity authentication device 100 may acquire information on the type of service provided by the identity authentication request device through the application, a sensor of the identity authentication request device 200, a camera of the identity authentication request device 200, the location of the identity authentication request device 200, a provider of the service, or use of the service.

For example, when the identity authentication request device 200 is a check-in electronic device for a hotel operator to provide accommodation services, the identity authentication device 100 may install a hotel application provided by the hotel operator according to a selection of the user for application installation.

In operation 203, the identity authentication device 100 may transmit personal information of the user excluding the biometric information (or the first data) of the user to the identity authentication request device 200 and the server 300 using the application. For example, the personal information of the user may be input to the identity authentication device 100 according to an initial manual of the application, and the identity authentication device 100 may transmit the input personal information of the user to the identity authentication request device 200 and the server 300. However, the configuration in which the personal information of the user is directly transmitted from the identity authentication device 100 to the server 300 is exemplary, and the present invention is not limited thereto. For example, the personal information of the user may be transmitted from the identity authentication device 100 to the server 300 via the identity authentication request device 200.

Information on the user is information requested by the identity authentication request device 200 and the server 300 and may include one or more items for an administrator (or operator), who manages a service provided by the identity authentication request device 200 and the server 300, to identity the user. For example, the information on the user may include at least one of a phone number, a PIN, an ID, a password, a name, a sex, an address, an e-mail address, an identification number (e.g., a membership registration number) related to the service provided by the identity authentication request device 200, the type of service in use, and details of the service. However, the information on the user does not include any form of biometric information (or the first data) of the user.

In operation 204, the identity authentication device 100 may receive the sensing information (or the second data) from the identity authentication request device 200 through the wireless communication circuit 110. For example, the identity authentication request device 200 may transmit data obtained by sensing the user's body through the sensor module 260 or the camera module 250 to the identity authentication device 100 so that identity authentication may be performed. The identity authentication device 100 may confirm a request for identity authentication by receiving the sensing information (or the second data) from the identity authentication request device 200. The identity authentication device 100 and the identity authentication request device 200 may set a type of biometric information (or first data) in advance. For example, the identity authentication device 100 and the identity authentication request device 200 may be set together such that the identity authentication device receives the sensing information (or the second data) (e.g., the face image) from the identity authentication request device 200 and performs identity authentication.

According to the exemplary embodiment, the identity authentication device 100 may check information on a device which transmits the sensing information (or the second data) on the basis of stored information on the identity authentication request device 200. When the device which transmits the sensing information (or the second data) differs from the pre-registered identity authentication request device 200, the identity authentication device 100 may not perform an identity authentication process. For example, the identity authentication device 100 may determine whether the identity authentication request device 200 is a pre-registered device using an identification number of the device which transmits the sensing information (or the second data).

In operation 205, the identity authentication device 100 may compare the biometric information (or the first data) of the user stored in the memory 130 with the sensing information (or the second data) received from the identity authentication request device 200 and determine whether to authenticate the user on the basis of the comparison result. When the biometric information (or the first data) and the sensing information (or the second data) of the user correspond to each other, the identity authentication device 100 may determine that the authentication is completed. In this case, the user's body sensed by the identity authentication request device 200 may be construed as corresponding to the body of a user of the identity authentication device 100. On the other hand, when the biometric information (or the first data) and the sensing information (or the second data) of the user do not correspond to each other, the identity authentication device 100 may determine that the identity authentication has failed. In this case, the user's body sensed by the identity authentication request device 200 may be construed as not corresponding to the body of the user of the identity authentication device 100.

In operation 206, the identity authentication device 100 may transmit authentication data as an authentication result determined in operation 205 to the identity authentication request device 200 using the wireless communication circuit 110. For example, the identity authentication device 100 may transmit authentication data, which is determined regarding whether the sensing information (or the second data) obtained by the identity authentication request device 200 corresponds to the user of the identity authentication device 100 on the basis of the biometric information (or the first data) of the user, to the identity authentication request device 200.

When the identity authentication is completed, the identity authentication device 100 may also transmit any one or more items predetermined in information on the user to the identity authentication request device 200. For example, the identity authentication device 100 may transmit the ID of the user to the identity authentication request device 200 together with data confirming that the identity authentication is completed. When the identity authentication fails, identity authentication device 100 may transmit data confirming that the identity authentication has failed to the identity authentication request device 200. When the identity authentication fails, the identity authentication device 100 may transmit data confirming that the identity authentication has failed to the identity authentication request device 200.

While performing the identity authentication using the biometric information (or the first data) of the user, the identity authentication device 100 according to the exemplary embodiment may also authenticate the ID card of the user. When the identity authentication is completed, the identity authentication device 100 may transmit the ID card information of the user stored in the memory 130 to the identity authentication request device 200 together with an authentication complete message. Alternatively, when the identity authentication is completed, the identity authentication device 100 may transmit a message indicating that the authentication of the ID card has been completed to the identity authentication request device 200 together with the authentication complete message.

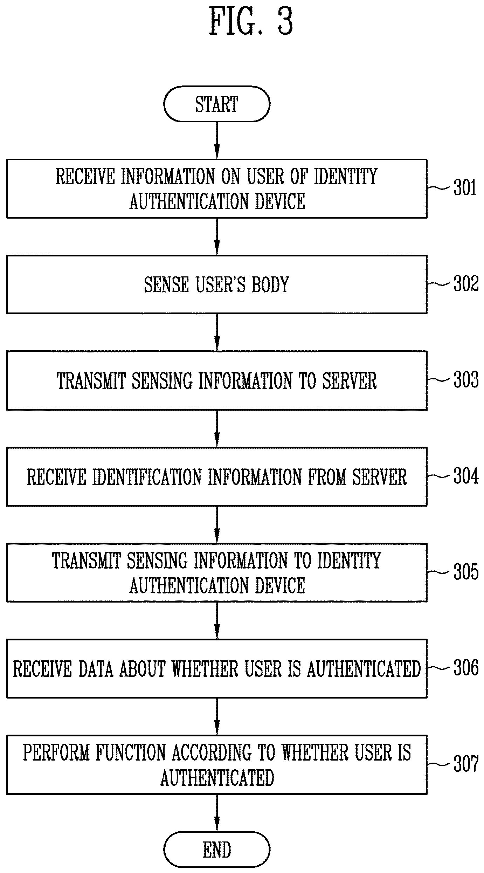

FIG. 3 is a flowchart illustrating a method of requesting, by an identity authentication request device, identity authentication from an identity authentication device using sensing data obtained by sensing a user's body according to an exemplary embodiment of the present invention. The identity authentication request device 200 may transmit sensing data obtained by sensing an adjacent user's body to the identity authentication device 100 and receive data about whether the user has been authenticated.

In operation 301, the identity authentication request device 200 may receive personal information of a user of the identity authentication device 100 from the identity authentication device 100. The personal information of the user is requested by the identity authentication request device 200 and may include one or more items for an administrator (or operator), who manages a service provided by the identity authentication request device 200, to identity the user. For example, the personal information on the user may include at least one of a phone number, a PIN, an ID, a password, a name, a sex, an address, an e-mail address, an identification number (e.g., a membership registration number) related to the service provided by the identity authentication request device 200, the type of service in use, and details of the service. The identity authentication request device 200 may request the identity authentication device 100 to transmit the personal information of the user using an application.

In operation 302, the identity authentication request device 200 may acquire sensing data (or second data) obtained by sensing a user's body through the camera module 250 or the sensor module 260. For example, the identity authentication request device 200 may acquire a face image as sensing information (or second data) by imaging the user's face through the camera module 250.

In operation 303, the identity authentication request device 200 may transmit the sensing information (or the second data) to the server 300 using the wireless communication circuit 210. For example, the identity authentication request device 200 may transmit the face image to the server 300 as the sensing information (or the second data). Here, the sensing information (or the second data) may be raw data transmitted from the camera module 250 or the sensor module 260, and the raw data is only transmitted to the identity authentication device 100 through the wireless communication circuit 210 without being stored in the memory 230 of the identity authentication request device 200.

In operation 304, the identity authentication request device 200 may receive identification information from the server 300 through the wireless communication circuit 210. In the exemplary embodiment, the identification information for identifying the identity authentication device 100 may be implemented in various ways. For example, the identification information may be any one of a phone number and a PIN for specifying the identity authentication device 100 in which the biometric information (or first data) of the user is stored. The identity authentication request device 200 may specify the identity authentication device 100 to which the sensing information (or the second data) will be transmitted on the basis of the identification information.

In operation 305, the identity authentication request device 200 may transmit the sensing information (or the second data) to the specified identity authentication device 100 through the wireless communication circuit 210. For example, the identity authentication request device 200 may transmit the face image to the identity authentication device 100 as the sensing information (or the second data).

In operation 306, the identity authentication request device 200 may receive authentication data from the identity authentication device 100 through the wireless communication circuit 210. Here, the authentication data may include a first result representing that the biometric information (or the first data) of the user corresponds to the sensing information (or the second data) or a second result representing that the biometric information (or the first data) of the user does not correspond to the sensing information (or the second data).

In operation 307, when authentication data including the first result is received from the identity authentication device 100, the identity authentication request device 200 may perform a predetermined first function according to successful authentication. For example, when it is determined to perform a function of opening a gate upon successful authentication, the identity authentication request device 200 may open the gate.

Meanwhile, when authentication data including the second result is received from the identity authentication device 100, the identity authentication request device 200 may perform a predetermined second function according to failed authentication. For example, when it is determined to output a failure notification message and a beep sound through the input/output device 240 upon failed authentication, the identity authentication request device 200 may output the text message "Authentication has failed" and output a voice message such as "Authentication has failed. Try again please."

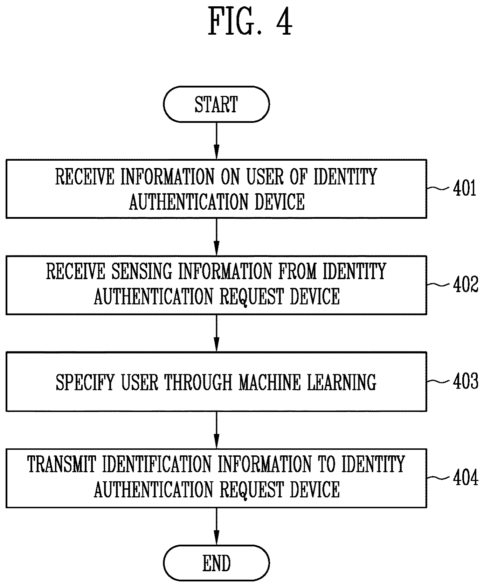

FIG. 4 is a flowchart illustrating a method of specifying, by a server, a user whose identity authentication is requested using sensing data obtained by sensing a user's body and transmitting identification information to an identity authentication request device according to an exemplary embodiment of the present invention.

Referring to FIGS. 1 and 4, in operation 401, the server 300 may receive personal information of a user of the identity authentication device 100 from the identity authentication device 100. The personal information of the user is information requested by the server 300 and may include one or more items for an administrator (or operator), who manages a service provided by the identity authentication request device 200, to identity the user. For example, the personal information on the user may include at least one of a phone number, a PIN, an ID, a password, a name, a sex, an address, an e-mail address, an identification number (e.g., a membership registration number) related to the service provided by the identity authentication request device 200, the type of service in use, and details of the service. The identity authentication request device 200 may request the identity authentication device 100 to transmit the personal information of the user using an application.

According to the exemplary embodiment, the server 300 may generate a lookup table on the basis of personal information of users. Here, the lookup table may be a table in which each of a plurality of users corresponds to identification information of one of the users. For example, the identification information may be a mobile phone number or a PIN for specifying the identity authentication device 100 in which biometric information (or first data) of a specific user is stored. However, the lookup table is not limited thereto and may be updated when the user manually inputs his or her identification information through the application.

In operation 402, the server 300 may receive sensing information (or second data) from the identity authentication request device 200 to specify the user (or the identity authentication device 100). To perform an identity authentication operation, the identity authentication request device 200 requires identification information for specifying the identity authentication device 100 to which the sensing information (or the second data) will be transmitted. According to the exemplary embodiment of the present invention, to prevent the security problem of biometric information leakage, a determination of whether the biometric information (or the first data) of the user corresponds to the sensing information (or the second data) is not performed in a specific service server (not shown) but performed in the identity authentication device 100. Accordingly, unlike the specific service server having a fixed Internet protocol (IP) address, it is necessary to specify the identity authentication device 100 for performing identity authentication. However, a procedure of sensing the user's body and inputting an identification number for specifying the identity authentication device 100 for identity authentication every time is contrary to the trend of non-face-to-face and contactless authentication. Therefore, a method is required to automatically acquire an identification number using sensing information (or second data).

According to the exemplary embodiment, the identity authentication request device 200 may acquire the sensing data (or the second data) obtained by sensing the user's body through the camera module 250 or the sensor module 260. For example, the identity authentication request device 200 may acquire a face image as sensing information (or second data) by imaging the user's face through the camera module 250.

In operation 403, the server 300 may specify the user (or the identity authentication device 100) from the received sensing information (or the second data) of the user through machine learning. As described above, the sensing information (or the second data) of the user may include an image file, a voice file, an electronic document, and the like. As an example, a case in which the sensing information (or the second data) of the user is in the form of an image file will be described below for convenience of description.

In this case, the biometric information extractor 310 may extract face information of the user from the image through machine learning. For example, the biometric information extractor 310 may extract the face information using at least one of a Haar-like algorithm and a CNN algorithm. In other words, the biometric information extractor 310 may use an algorithm obtained by combining characteristics of the Haar-like algorithm and the CNN algorithm. The CNN algorithm exhibits excellent performance in big data processing.

According to the exemplary embodiment, the biometric information extractor 310 may extract the biometric information (or the first data) on the basis of cumulative machine learning data stored in the database 330 in advance. In this case, the cumulative machine learning data may be obtained by accumulating machine learning results of the biometric information extractor 310 on sensing information (or second data). The cumulative machine learning data may include only features of images for determining which user corresponds to a face extracted from an arbitrary image. In other words, the cumulative machine learning data does not function alone as biometric information (or first data) but may be information for determining who is a user requesting identity authentication from the image received from the identity authentication request device 200.

The matcher 320 of the server 300 may select personal information (e.g., identification information) of a user corresponding to the biometric information (or the first data) of the user extracted through the biometric information extractor 310 from among pieces of pre-stored personal information of a plurality of users.

According to the exemplary embodiment, the matcher 320 may determine whether the biometric information (or the first data) corresponds to a certain user's personal information on the basis of a lookup table pre-stored in the database 330. Here, the lookup table may include personal information (e.g., identification information) corresponding to each of the plurality of users. For example, the lookup table may be a table in which each of the plurality of users corresponds to identification information of one of the plurality of users. For example, the identification information may be a phone number or a PIN for identifying the identity authentication device 100 in which biometric information (or first data) of a specific user is stored.

According to the exemplary embodiment, the database 330 may store only cumulative data which is a machine learning result from the sensing information (or the second data) of the user and may not store either of the biometric information (or the first data) and the sensing information (or the second data). Here, the cumulative data may be updated every time the biometric information extractor 310 performs machine learning on an image received from the identity authentication request device 200. The database 330 may include a lookup table in which each of a plurality of users corresponds to identification information (e.g., mobile phone numbers or PINs) of one of the plurality of users.

In operation 404, the server 300 may transmit the identification information to the identity authentication request device 200. Accordingly, the identity authentication request device 200 may automatically specify the identity authentication device 100 to which the sensing information (or the second data) will be transmitted to perform an identity authentication operation.

Meanwhile, when authentication data is not received from the identity authentication device 100 within a preset period after the identity authentication request device 200 transmits the sensing information (or the second data) to the identity authentication device 100 specified on the basis of the identification information, the identity authentication request device 200 may output an identification failure message and transmit a retraining command to the server 300. This is because the sensing information (or the second data) may be considered as being transmitted to the wrong identity authentication device 100 on the basis of wrong identification information which is the wrong biometric information (or the first data) extracted from the sensing information (or the second data) of the user. The server 300 may increase the accuracy in extracting biometric information (or first data) from sensing information (or second data) of users through retraining.

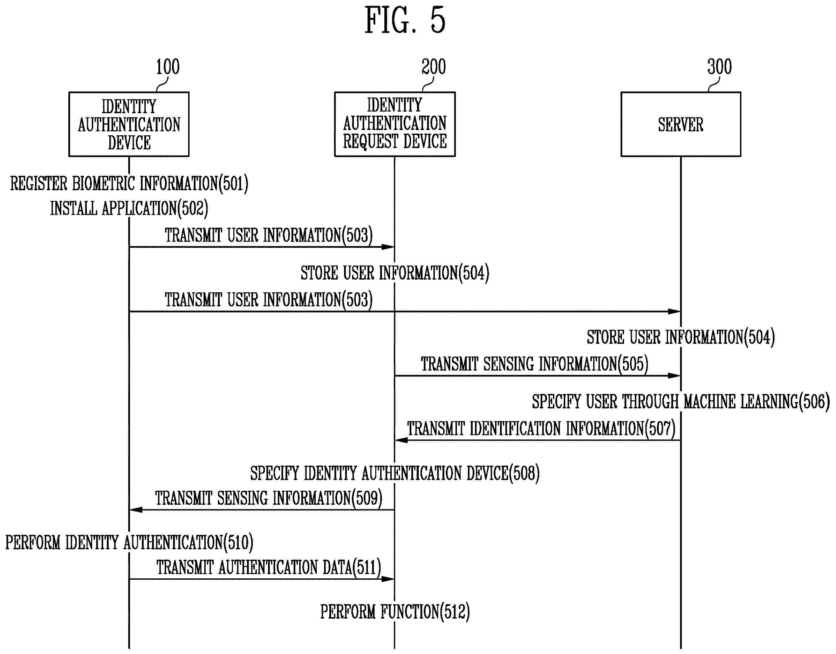

FIG. 5 is a sequence diagram illustrating an identity authentication process triggered by an identity authentication request among an identity authentication device, an identity authentication request device, and a server according to an exemplary embodiment of the present invention.

Referring to FIGS. 1 to 5, the server 300 may extract identification information corresponding to biometric information (or second data) through machine learning, the identity authentication request device 200 may specify the identity authentication device 100 on the basis of the identification information, and the specified identity authentication device 100 may receive sensing information (or second data) from the identity authentication request device 200, determine whether to authenticate the user by comparing the received sensing information with biometric information (or first data), and transmit authentication or non-authentication confirmation data to the identity authentication request device 200. Each operation of FIG. 5 is as follows.

In operation 501, the identity authentication device 100 may store biometric information (or first data) of a user extracted on the basis of sensing data (or second data) obtained by sensing the user's body in the memory 130. The operation corresponds to operation 201 of FIG. 2.

In operation 502, the identity authentication device 100 may install an application related to the identity authentication request device 200 according to a selection of the user for using a service provided by the identity authentication request device 200. The operation corresponds to operation 202 of FIG. 2.

In operation 503, the identity authentication device 100 may transmit personal information of the user excluding biometric information of the user to the identity authentication request device 200 and the server 300 using the application. The operation corresponds to operation 203 of FIG. 2 and operation 301 of FIG. 3.

In operation 504, the identity authentication request device 200 and the server 300 may store the received personal information of the user in the memory 230 and the database 330, respectively.

In operation 505, the identity authentication request device 200 may transmit sensing information (or second data) to the server 300. The operation corresponds to operation 303 of FIG. 3.

In operation 506, through machine learning, the server 300 may determine identification information for specifying the identity authentication device 100 to which the sensing information (or the second data) will be transmitted. The biometric information extractor 310 may extract biometric information (e.g., face information) of the user from the sensing information (e.g., an image) through machine learning. The matcher 320 may select identification information (e.g., a mobile phone number or a PIN) of the user corresponding to the biometric information (or the face information) of the user extracted by the biometric information extractor 310 from personal information (e.g., identification information) of a plurality of users pre-stored in the database 330. The database 330 may include a lookup table in which each of the plurality of users corresponds to the identification information (e.g., mobile phone numbers or PINs) of one of the plurality of users. The operation corresponds to operation 403 of FIG. 4.

In operation 507, the server 300 may transmit the identification information to the identity authentication request device 200. The operation corresponds to operation 404 of FIG. 4.

In operation 508, the identity authentication request device 200 may specify the identity authentication device 100 to which the sensing information (the second data) will be transmitted on the basis of the identification information (e.g., a mobile phone number or a PIN). The operation corresponds to operation 304 of FIG. 3.

In operation 509, the identity authentication request device 200 may transmit the sensing information (or the second data) to the specified identity authentication device 100. The operation corresponds to operation 305 of FIG. 3.

In operation 510, the identity authentication device 100 may determine whether the sensing information (or the second data) received from the identity authentication request device 200 corresponds to the pre-stored biometric information (or the first data) of the user. The operation corresponds to operation 205 of FIG. 2.

In operation 511, the identity authentication device 100 may transmit authentication data to the identity authentication request device 200. Here, the authentication data may include a first result representing that the biometric information (or the first data) of the user corresponds to the sensing information (or the second data) or a second result representing that the biometric information (or the first data) of the user does not correspond to the sensing information (or the second data). The operation corresponds to operation 206 of FIG. 2.

In operation 512, the identity authentication request device 200 may perform a predetermined function according to a result value of the received authentication data. For example, when authentication data including the first result is received, the identity authentication request device 200 may perform a function of opening a gate. On the other hand, when authentication data including the second result is received, the identity authentication request device 200 may output an authentication failure message. The operation corresponds to operation 307 of FIG. 3.

Other exemplary embodiments will be described below. In the following embodiments, descriptions of the same configuration as in the above-described embodiments will be omitted or simplified, and differences will be mainly described.

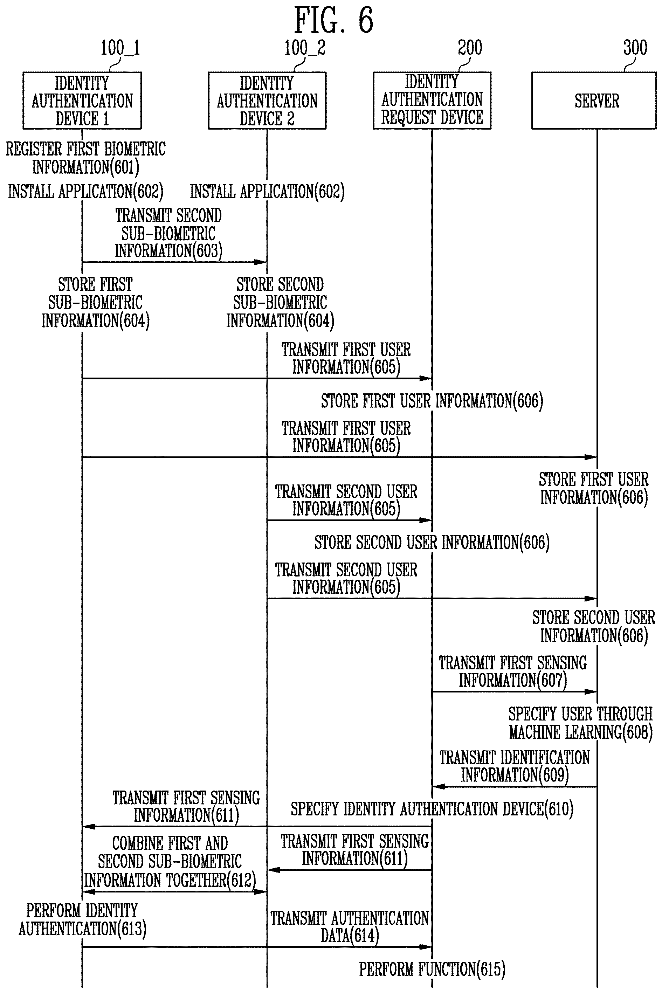

FIG. 6 is a sequence diagram illustrating an identity authentication process triggered by an identity authentication request among an identity authentication device, an identity authentication request device, and a server according to another exemplary embodiment of the present invention.

The exemplary embodiment of FIG. 6 in which identity authentication is performed by at least two identity authentication devices 100_1 and 100_2 is different from the exemplary embodiment of FIG. 5 in which identity authentication is performed by the single identity authentication device 100. Although only two identity authentication devices are shown in FIG. 6 for convenience of description, the number of identity authentication devices is not limited thereto. Meanwhile, the first and second identity authentication devices 100_1 and 100_2 have substantially the same configuration as the identity authentication device 100 shown in FIG. 1, and thus like components will be indicated by like reference numerals.

Specifically, referring to FIGS. 1 to 6, the server 300 may extract identification information corresponding to biometric information (or second data) through machine learning, the identity authentication request device 200 may specify the first and second identity authentication devices 100_1 and 100_2 on the basis of the identification information, and each of the specified first and second identity authentication devices 100_1 and 100_2 may receive first sensing information (or second data) from the identity authentication request device 200, combine first sub-biometric information pre-stored in the first identity authentication device 100_1 and second sub-biometric information pre-stored in the second identity authentication device 100_2 together, determine whether the first identity authentication device (or a first user) is authenticated by comparing the combined sub-biometric information with first biometric information (or first data) of a user, and transmit authentication or non-authentication confirmation data to the identity authentication request device 200. Each operation of FIG. 6 is as follows.

In operation 601, the first identity authentication device 100_1 may store first biometric information (or first data) of a first user extracted on the basis of sensing data (or second data) obtained by sensing the first user's body in the memory 130. Likewise, the second identity authentication device 100_2 may store second biometric information (or first data) of a second user extracted on the basis of sensing data (or second data) obtained by sensing the second user's body in the memory 130. The operation corresponds to operation 201 of FIG. 2.

In operation 602, the first and second identity authentication devices 100_1 and 100_2 may install an application related to the identity authentication request device 200 according to selections of the first and second users for using a service provided by the identity authentication request device 200. The operation corresponds to operation 202 of FIG. 2.

In operation 603, the first identity authentication device 100_1 may transmit second sub-biometric information to the second identity authentication device 100_2. Here, the first biometric information of the first user may be divided into a plurality of pieces of sub-biometric information corresponding to the number of identity authentication devices connected to the identity authentication system 1. For example, when the two identity authentication devices 100_1 and 100_2 are included in the identity authentication system 1, the first biometric information may include first sub-biometric information and second sub-biometric information. Like the first biometric information, the second biometric information of the second user may be divided into a plurality of pieces of sub-biometric information corresponding to the number of identity authentication devices connected to the identity authentication system 1.

According to the exemplary embodiment, when biometric information is divided into a plurality of pieces of sub-biometric information corresponding to the number of identity authentication devices connected to the identity authentication system 1, each of the identity authentication devices does not store the complete biometric information, and thus security can be improved. In other words, in the first identity authentication device 100_1 shown in FIG. 6, the first biometric information is deleted, and the first sub-metric information is stored. Since the second identity authentication device 100_2 has substantially the same configuration as the first identity authentication device 100_1, overlapping description will be omitted.

In operation 604, the first biometric information may be stored in the first and second identity authentication devices 100_1 and 100_2 in a distributed manner. For example, the first sub-biometric information may be stored in the first identity authentication device 100_1, and the second sub-biometric information may be stored in the second identity authentication device 100_2.

In operation 605, the first identity authentication device 100_1 may transmit first personal information of the first user excluding the first biometric information of the first user to the identity authentication request device 200 and the server 300 using the application. Likewise, the second identity authentication device 100_2 may transmit second personal information of the second user excluding the second biometric information of the second user to the identity authentication request device 200 and the server 300 using the application. The operation corresponds to operation 203 of FIG. 2 and operation 301 of FIG. 3.

In operation 606, the identity authentication request device 200 and the server 300 may store the received first personal information of the first user and the received second personal information of the second user in the memory 230 and the database 330, respectively.

In operation 607, the identity authentication request device 200 may transmit first sensing information (or second data) of the first user to the server 300. This is on the assumption that identity authentication is requested for the first user of the first identity authentication device 100_1, and when identity authentication is requested for the second user of the second identity authentication device 100_2, second sensing information of the second user may be transmitted. The operation corresponds to operation 303 of FIG. 3.

In operation 608, through machine learning, the server 300 may determine identification information for specifying the first identity authentication device 100_1 to which the first sensing information (or the second data) will be transmitted. The biometric information extractor 310 may extract first biometric information (e.g., face information) of the first user from the first sensing information (e.g., an image) through machine learning. The matcher 320 may select identification information (e.g., a mobile phone number or a PIN) of the first user corresponding to the first biometric information (or the face information) of the first user extracted by the biometric information extractor 310 from personal information (e.g., identification information) of a plurality of users pre-stored in the database 330.

The database 330 may include a lookup table in which biometric information (or face information) of the plurality of users corresponds to the identification information (e.g., mobile phone numbers or PINs) of the plurality of users on a one-to-one basis. Meanwhile, when a plurality of identity authentication devices are included in the identity authentication system 1, the lookup table may be a table in which biometric information (or face information) of a user for whom identity authentication is requested corresponds to identification information (e.g., a mobile phone number and a PIN) of a plurality of identity authentication devices on a one-to-many basis. In this case, it is assumed that biometric information of the user for whom identity authentication is requested is stored in a distributed manner in the plurality of identity authentication devices. The operation corresponds to operation 403 of FIG. 4.

In operation 609, the server 300 may transmit the identification information to the identity authentication request device 200. The operation corresponds to operation 404 of FIG. 4.

In operation 610, the identity authentication request device 200 may specify the first and second identity authentication devices 100_1 and 100_2 to which the first sensing information (the second data) of the first user will be transmitted on the basis of the identification information (e.g., the mobile phone number or the PIN). The operation corresponds to operation 304 of FIG. 3.

In operation 611, the identity authentication request device 200 may transmit the first sensing information (or the second data) of the first user to each of the specified first and second identity authentication devices 100_1 and 100_2. The operation corresponds to operation 305 of FIG. 3.

In operation 612, the first identity authentication device 100_1 may receive the second sub-biometric information from the second identity authentication device 100_2 and generate the first biometric information by combining the pre-stored first sub-biometric information and the second sub-biometric information together. As described above, identity authentication is performed by a plurality of identity authentication devices, and thus security is improved.

In operation 613, the first identity authentication device 100_1 may determine whether the first sensing information (or the second data) received from the identity authentication request device 200 corresponds to the first biometric information (or the first data) combined in operation 612. The operation corresponds to operation 205 of FIG. 2.

In operation 614, the first identity authentication device 100_1 may transmit authentication data to the identity authentication request device 200. Here, the authentication data may include a first result representing that the first biometric information (or the first data) corresponds to the first sensing information (or the second data) or a second result representing that the first biometric information (or the first data) does not correspond to the first sensing information (or the second data). The operation corresponds to operation 206 of FIG. 2.

In operation 615, the identity authentication request device 200 may perform a predetermined function according to a result value of the received authentication data. For example, when authentication data including the first result is received, the identity authentication request device 200 may perform a function of opening a gate. On the other hand, when authentication data including the second result is received, the identity authentication request device 200 may output an authentication failure message. The operation corresponds to operation 307 of FIG. 3.

The identity authentication system according to the exemplary embodiment of the present invention matches biometric information of a user to an identification code through machine learning and thus can allow non-face-to-face and contactless authentication which does not require the manual input of an identification code for identity authentication every time.

The security level of the identity authentication system according to the exemplary embodiment of the present invention can be improved through a blockchain.

Effects of the present invention are not limited to those described above, and other effects are included the detailed description.

The above-described embodiments may be implemented as a hardware component, a software component, and/or a combination of a hardware component and a software component. For example, the devices, methods, and components described in the exemplary embodiments may be implemented using one or more general-purpose computers or special purpose computers such as a processor, a controller, an arithmetic logic unit (ALU), a digital signal processor, a microcomputer, a field programmable gate array (FPGA), a programmable logic unit (PLU), a microprocessor, or any other device capable of executing and responding to an instruction. A processing device may execute an operating system (OS) and one or more software applications executed on the OS. In addition, the processing device may access, store, manipulate, process, and generate data in response to the execution of the software. For convenience of understanding, when a single processing device is described as being used in some cases, those of ordinary skill in the art recognize that the processing device may include a plurality of processing elements and/or a plurality of types of processing elements. For example, the processing device may include a plurality of processors or a single processor and a single controller. In addition, other processing configurations, such as a parallel processor, are also possible.

Software may include a computer program, code, an instruction, or one or more combinations thereof and may form the processing device to be operated as desired or may independently or collectively command the processing device. The software and/or data may be permanently or temporarily embodied in any type of machine, component, physical device, virtual equipment, computer storage medium or device, or in a propagated signal wave in order to be interpreted by the processing device or provide an instruction or data to the processing device. The software may be distributed over a networked computer system to be stored or executed in a distributed manner. The software and data may be stored on one or more computer-readable recording media.

The method according to the exemplary embodiment may be implemented in a program instruction form, which may be executed through various computing devices, and recorded on a computer-readable medium. The computer-readable medium may include program instructions, data files, data structures, etc. alone or in combination. The program instructions recorded on the medium may be specially designed and configured for the embodiment or may be known to and available for use by those of ordinary skill in the computer software field. Examples of the computer-readable recording medium include magnetic media, such as a hard disk, a floppy disk, and magnetic tape, optical recording media, such as a compact disc (CD)-ROM and a digital versatile disc (DVD), magneto-optical media, such as a floptical disk, and hardware devices which are specially configured to store and execute program instructions such as a ROM, a RAM, and a flash memory. Examples of the program instructions include not only machine language codes created by a compiler but also high-level language code that can be executed by a computer using an interpreter or the like. The above hardware devices may be changed to one or more software modules to perform the operations of the exemplary embodiment, and vice versa.

Although the present invention has been described above in connection with the limited embodiments and drawings, those skilled in the technical field to which the present invention pertains can make various modifications and alterations from the description. For example, proper results may be achieved even when the descriptions are performed in an order different from that of the above-described method and/or the components of the above-described system, structure, device, circuit, etc. are coupled or combined in a form different from that described above or replaced or substituted with other components or equivalents. Accordingly, other implementations, and other embodiments fall within the scope of the following claims.

## Claims

1. An identity authentication request device comprising:
a sensor module;
a wireless communication circuit; and
at least one processor electrically connected to the sensor module and the wireless communication circuit,
wherein the at least one processor acquires a second data obtained by sensing a user's body through the sensor module,
transmits the second data to a identity authentication device identified based on a personal information of the user received from a server,
performs a predetermined function on the basis of a authentication data received from the identity authentication device,
the authentication data is a result of determination whether a first data corresponds to the second data, and
the first data includes biometric information of the user and is stored in the identity authentication device.

2. The identity authentication request device of claim 1,
wherein the personal information of the user received from the server is selected by the server as corresponding to the second data among pieces of pre-stored personal information of a plurality of users in the server.

3. The identity authentication request device of claim 2,
wherein the personal information of the user received from the server is selected by the server as corresponding to the second data among pieces of pre-stored personal information of a plurality of users through machine learning on the second data in the server.

4. The identity authentication request device of claim 1,
wherein, when the authentication data is not received from the identified identity authentication device within a preset period, the at least one processor outputs an identification failure message and transmits a retraining command to the server.

5. The identity authentication request device of claim 1,
wherein the at least one processor performs a preset function when the authentication data includes the result representing that the first data corresponds to the second data and outputs an authentication failure message when the authentication data includes the result representing that the first data does not correspond to the second data.

6. The identity authentication request device of claim 1,
wherein the first data includes at least one of face information, voice information, fingerprint information, deoxyribonucleic acid (DNA) information, body skeleton information, hand shape information, retina information, iris information, vein information, ECG information, handwriting information, gait information, signature information, blood vessel information, sweat gland structure information, and biomolecule information, and the second data includes data of same type as the first data.

7. The identity authentication request device of claim 1,
wherein the first data includes face information of the user, and the second data includes an image of the user's face.

8. The identity authentication request device of claim 1,
wherein the personal information includes at least one of a mobile phone number a PIN, an identification (ID), a password, a name, a sex, an address, an e-mail address for identifying the identity authentication device.

9. An operation method by the identity authentication request device of claims 1 to 8 in an identity authentication system, comprising:
acquiring a second data obtained by sensing a user's body through a sensor module;
transmitting the second data to a identity authentication device identified based on a personal information of the user received from a server;
performing a predetermined function on the basis of a authentication data received from the identity authentication device;
wherein the authentication data is a result of determination whether a first data corresponds to the second data, and
the first data includes biometric information of the user and is stored in the identity authentication device.

10. A computer-readable recording medium storing program that causes a computer to execute the steps of:
acquiring a second data obtained by sensing a user's body through a sensor module;
transmitting the second data to a identity authentication device identified based on a personal information of the user received from a server;
performing a predetermined function on the basis of a authentication data received from the identity authentication device;
wherein the authentication data is a result of determination whether a first data corresponds to the second data, and
the first data includes biometric information of the user and is stored in the identity authentication device.

## Patentansprüche

1. Vorrichtung zur Anforderung einer Identitätsauthentifizierung, umfassend:
ein Sensormodul;
eine drahtlose Kommunikationsschaltung; und
mindestens einen Prozessor, der elektrisch mit dem Sensormodul und der drahtlosen Kommunikationsschaltung verbunden ist,
wobei der mindestens eine Prozessor zweite Daten erfasst, die durch Erfassen des Körpers eines Benutzers durch das Sensormodul erhalten werden,
die zweiten Daten an eine Identitätsauthentifizierungsvorrichtung überträgt, die basierend auf persönlichen Informationen des Benutzers identifiziert wird, die von einem Server empfangen werden,
eine vorbestimmte Funktion auf der Basis von Authentifizierungsdaten durchführt, die von der Identitätsauthentifizierungsvorrichtung empfangen werden,
die Authentifizierungsdaten ein Ergebnis der Bestimmung sind, ob erste Daten den zweiten Daten entsprechen, und
die ersten Daten biometrische Informationen des Benutzers enthalten und in der Identitätsauthentifizierungsvorrichtung gespeichert sind.

2. Vorrichtung zur Anforderung einer Identitätsauthentifizierung nach Anspruch 1,
wobei die persönlichen Informationen des Benutzers, die von dem Server empfangen werden, von dem Server als den zweiten Daten entsprechend aus Teilen von vorgespeicherten persönlichen Informationen einer Vielzahl von Benutzern in dem Server ausgewählt werden.

3. Vorrichtung zur Anforderung einer Identitätsauthentifizierung nach Anspruch 2,
wobei die persönlichen Informationen des Benutzers, die von dem Server empfangen werden, von dem Server als den zweiten Daten entsprechend aus Teilen von vorgespeicherten persönlichen Informationen einer Vielzahl von Benutzern durch maschinelles Lernen an den zweiten Daten in dem Server ausgewählt werden.

4. Vorrichtung zur Anforderung einer Identitätsauthentifizierung nach Anspruch 1,
wobei, wenn die Authentifizierungsdaten nicht von der identifizierten Identitätsauthentifizierungsvorrichtung innerhalb eines voreingestellten Zeitraums empfangen werden, der mindestens eine Prozessor eine Identifikationsfehlermeldung ausgibt und einen Neutrainingsbefehl an den Server überträgt.

5. Vorrichtung zur Anforderung einer Identitätsauthentifizierung nach Anspruch 1,
wobei der mindestens eine Prozessor eine voreingestellte Funktion durchführt, wenn die Authentifizierungsdaten das Ergebnis enthalten, das darstellt, dass die ersten Daten den zweiten Daten entsprechen, und eine Authentifizierungsfehlermeldung ausgibt, wenn die Authentifizierungsdaten das Ergebnis enthalten, das darstellt, dass die ersten Daten nicht den zweiten Daten entsprechen.

6. Vorrichtung zur Anforderung einer Identitätsauthentifizierung nach Anspruch 1,
wobei die ersten Daten mindestens eines von Gesichtsinformationen, Stimmeninformationen, Fingerabdruckinformationen, Desoxyribonukleinsäure(DNA)-Informationen, Körperskelettinformationen, Handforminformationen, Netzhautinformationen, Irisinformationen, Veneninformationen, EKG-Informationen, Handschriftinformationen, Ganginformationen, Signaturinformationen, Blutgefäßinformationen, Schweißdrüsenstrukturinformationen und Biomolekülinformationen enthalten und die zweiten Daten Daten desselben Typs wie die ersten Daten enthalten.

7. Vorrichtung zur Anforderung einer Identitätsauthentifizierung nach Anspruch 1,
wobei die ersten Daten Gesichtsinformationen des Benutzers enthalten und die zweiten Daten ein Bild des Gesichts des Benutzers enthalten.

8. Vorrichtung zur Anforderung einer Identitätsauthentifizierung nach Anspruch 1,
wobei die persönlichen Informationen mindestens eines von einer Mobiltelefonnummer, einer PIN, einer Identifikation (ID), einem Passwort, einem Namen, einem Geschlecht, einer Adresse, einer E-Mail-Adresse zum Identifizieren der Identitätsauthentifizierungsvorrichtung enthalten.

9. Betriebsverfahren durch die Vorrichtung zur Anforderung einer Identitätsauthentifizierung nach den Ansprüchen 1 bis 8 in einem Identitätsauthentifizierungssystem, umfassend:
Erfassen zweiter Daten, die durch Erfassen des Körpers eines Benutzers durch ein Sensormodul erhalten werden;
Übertragen der zweiten Daten an eine Identitätsauthentifizierungsvorrichtung, die basierend auf persönlichen Informationen des Benutzers identifiziert wird, die von einem Server empfangen werden;
Durchführen einer vorbestimmten Funktion auf der Basis von Authentifizierungsdaten, die von der Identitätsauthentifizierungsvorrichtung empfangen werden;
wobei die Authentifizierungsdaten ein Ergebnis der Bestimmung sind, ob erste Daten den zweiten Daten entsprechen, und
die ersten Daten biometrische Informationen des Benutzers enthalten und in der Identitätsauthentifizierungsvorrichtung gespeichert sind.

10. Computerlesbares Aufzeichnungsmedium, das ein Programm speichert, das einen Computer veranlasst, die folgenden Schritte auszuführen:
Erfassen zweiter Daten, die durch Erfassen des Körpers eines Benutzers durch ein Sensormodul erhalten werden;
Übertragen der zweiten Daten an eine Identitätsauthentifizierungsvorrichtung, die basierend auf persönlichen Informationen des Benutzers identifiziert wird, die von einem Server empfangen werden;
Durchführen einer vorbestimmten Funktion auf der Basis von Authentifizierungsdaten, die von der Identitätsauthentifizierungsvorrichtung empfangen werden;
wobei die Authentifizierungsdaten ein Ergebnis der Bestimmung sind, ob erste Daten den zweiten Daten entsprechen, und
die ersten Daten biometrische Informationen des Benutzers enthalten und in der Identitätsauthentifizierungsvorrichtung gespeichert sind.

## Revendications

1. Dispositif de demande d'authentification d'identité comprenant :
un module de capteur ;
un circuit de communication sans fil ; et
au moins un processeur connecté électriquement au module de capteur et au circuit de communication sans fil,
dans lequel l'au moins un processeur acquiert des secondes données obtenues en détectant le corps d'un utilisateur par l'intermédiaire du module de capteur,
transmet les secondes données à un dispositif d'authentification d'identité identifié sur la base d'informations personnelles de l'utilisateur reçues d'un serveur,
exécute une fonction prédéterminée sur la base de données d'authentification reçues du dispositif d'authentification d'identité,
les données d'authentification sont un résultat de la détermination si des premières données correspondent aux secondes données, et
les premières données comprennent des informations biométriques de l'utilisateur et sont stockées dans le dispositif d'authentification d'identité.

2. Dispositif de demande d'authentification d'identité selon la revendication 1,
dans lequel les informations personnelles de l'utilisateur reçues du serveur sont sélectionnées par le serveur comme correspondant aux secondes données parmi des éléments d'informations personnelles pré-stockées d'une pluralité d'utilisateurs dans le serveur.

3. Dispositif de demande d'authentification d'identité selon la revendication 2,
dans lequel les informations personnelles de l'utilisateur reçues du serveur sont sélectionnées par le serveur comme correspondant aux secondes données parmi des éléments d'informations personnelles pré-stockées d'une pluralité d'utilisateurs par apprentissage automatique sur les secondes données dans le serveur.

4. Dispositif de demande d'authentification d'identité selon la revendication 1,
dans lequel, lorsque les données d'authentification ne sont pas reçues du dispositif d'authentification d'identité identifié dans une période prédéfinie, l'au moins un processeur délivre un message d'échec d'identification et transmet une commande de réapprentissage au serveur.

5. Dispositif de demande d'authentification d'identité selon la revendication 1,
dans lequel l'au moins un processeur exécute une fonction prédéfinie lorsque les données d'authentification comprennent le résultat représentant que les premières données correspondent aux secondes données et délivre un message d'échec d'authentification lorsque les données d'authentification comprennent le résultat représentant que les premières données ne correspondent pas aux secondes données.

6. Dispositif de demande d'authentification d'identité selon la revendication 1,
dans lequel les premières données comprennent des informations de visage et/ou des informations vocales et/ou des informations d'empreinte digitale et/ou des informations d'acide désoxyribonucléique (ADN) et/ou des informations de squelette corporel et/ou des informations de forme de main et/ou des informations de rétine et/ou des informations d'iris et/ou des informations de veine et/ou des informations d'ECG et/ou des informations d'écriture manuscrite et/ou des informations de démarche et/ou des informations de signature et/ou des informations de vaisseaux sanguins et/ou des informations de structure de glande sudoripare et/ou des informations de biomolécule, et les secondes données comprennent des données du même type que les premières données.

7. Dispositif de demande d'authentification d'identité selon la revendication 1,
dans lequel les premières données comprennent des informations de visage de l'utilisateur et les secondes données comprennent une image du visage de l'utilisateur.

8. Dispositif de demande d'authentification d'identité selon la revendication 1,
dans lequel les informations personnelles comprennent au moins l'un d'un numéro de téléphone mobile, d'un PIN, d'une identification (ID), d'un mot de passe, d'un nom, d'un sexe, d'une adresse, d'une adresse de courrier électronique pour identifier le dispositif d'authentification d'identité.

9. Procédé de fonctionnement par le dispositif de demande d'authentification d'identité selon les revendications 1 à 8 dans un système d'authentification d'identité, comprenant :
l'acquisition de secondes données obtenues en détectant le corps d'un utilisateur par l'intermédiaire d'un module de capteur ;
la transmission des secondes données à un dispositif d'authentification d'identité identifié sur la base d'informations personnelles de l'utilisateur reçues d'un serveur ;
l'exécution d'une fonction prédéterminée sur la base de données d'authentification reçues du dispositif d'authentification d'identité ;
dans lequel les données d'authentification sont un résultat de la détermination si des premières données correspondent aux secondes données, et
les premières données comprennent des informations biométriques de l'utilisateur et sont stockées dans le dispositif d'authentification d'identité.

10. Support d'enregistrement lisible par ordinateur stockant un programme qui amène un ordinateur à exécuter les étapes de :
l'acquisition de secondes données obtenues en détectant le corps d'un utilisateur par l'intermédiaire d'un module de capteur ;
la transmission des secondes données à un dispositif d'authentification d'identité identifié sur la base d'informations personnelles de l'utilisateur reçues d'un serveur ;
l'exécution d'une fonction prédéterminée sur la base de données d'authentification reçues du dispositif d'authentification d'identité ;
dans lequel les données d'authentification sont un résultat de la détermination si des premières données correspondent aux secondes données, et
les premières données comprennent des informations biométriques de l'utilisateur et sont stockées dans le dispositif d'authentification d'identité.
